# FASCICULE DE BREVET EUROPEEN

(11) **EP 4 038 001 B1**
(45) Date de publication et mention de la délivrance du brevet: **28.08.2024**
(21) Numéro de dépôt: 20776204.8
(22) Date de dépôt: 30.09.2020
(51) Int. Cl.: B65G 47/86, B65G 47/90

(54) **PINCE DE MANIPULATION DE CORPS CREUX ET PROCEDE DE FABRICATION**
GREIFER ZUM HANDHABEN VON HOHLKÖRPERN UND HERSTELLUNGSVERFAHREN
GRIPPER FOR HANDLING HOLLOW BODIES AND MANUFACTURING METHOD

(30) Priorité: 03.10.2019 FR 1910943
(43) Date de publication de la demande: 10.08.2022
(73) Titulaire: Sidel Participations, 76930 Octeville-sur-Mer (FR)
(72) Inventeur: MICHEL, Jocelyn, 76930 OCTEVILLE-SUR-MER (FR)
(74) Mandataire: Sidel Group
(86) Numéro de dépôt international: PCT/EP2020/077368
(87) Numéro de publication internationale: WO 2021/064021

(56) Documents cités:
- EP-A1- 2 248 759
- EP-A1- 2 248 759
- WO-A1-03/078285
- WO-A1-03/078285
- WO-A1-2015/121031
- WO-A1-2015/121031
- WO-A1-2017/184740
- WO-A1-2017/184740
- DE-A1- 3 040 096
- DE-A1- 3 040 096
- JP-A- 2007 084 296
- JP-A- 2007 084 296

## Description

Le domaine de l'invention est celui de la maintenance des unités de fabrication de récipients à partir de préformes en matière plastique.

Plus précisément, l'invention concerne les pinces de manipulation des corps creux qui se saisissent des corps creux à convoyer au sein de l'unité de fabrication.

Pour fabriquer des récipients en matière plastique, par exemple en P.E.T. (acronyme du terme polyéthylène téréphtalate), des préformes sont initialement chauffées dans une unité de chauffe avant d'être envoyées dans une unité de formage. Dans l'unité de formage, les préformes sont insérées dans un moule et un fluide sous pression est alors injecté dans les préformes afin d'étirer la matière plastique pour lui faire épouser les parois des moules et ainsi former les récipients.

Dans la suite de la description, le corps creux sera employé pour désigner tant une préforme qu'un récipient final ayant subi au moins une opération de soufflage ou une opération d'étirage-soufflage.

Dans les unités de fabrication des récipients, des pinces de manipulation convoient les préformes, les ébauches et les récipients de postes en postes.

Ces pinces comprennent deux branches indépendantes et, généralement, symétriques l'une par rapport à l'autre.

Une branche comprend une base couplée à un organe de maintien, et une mâchoire s'étendant depuis la base. La mâchoire présente un bord avant destiné à entrer en contact avec le corps creux lorsque le corps creux est inséré dans la pince, extrait de la pince, ou serré par la pince. Le document EP 2 248 759 A1 divulgue une branche de pince de manipulation selon le préambule de la revendication 1.

Ces pinces sont des pièces en métal obtenues par usinage de précision. De cette manière les pinces peuvent présenter des caractéristiques précises pour supporter les conditions de fabrication des récipients (température, cadence, efforts, ...).

La précision de leur forme est également particulièrement importante pour éviter que les corps creux ne soient marqués par les bords avant des pinces lors de leur transfert. Un marquage des corps creux par les pinces est en effet rédhibitoire vis-à-vis de la commercialisation des récipients qui seront fabriqués et qui présenteront ainsi le même marquage.

En pratique, on déplore que ces pinces soient fragiles. En effet, il arrive relativement fréquemment qu'elles cassent, notamment lorsque les préformes ou les récipients sont insérées dans les pinces ou bien lorsque ces corps creux, maintenus par les pinces de manipulation, sont saisis par un organe de manipulation et arrachés des pinces.

Lors de cet arrachement notamment, il se crée un effort de vétissage correspondant à un effort d'arrachement du corps creux depuis la pince. Ce vétissage peut amener une pince à plier puis à casser.

Ces pinces sont des pièces de mécanique de précision.

Les fabricants de récipient possèdent des unités de fabrication pouvant nécessiter plus d'une trentaine de formes différentes de pinces de manipulation. En conséquence, des stocks de pièces de remplacement ne sont pas constitués. La casse d'une pince de manipulation entraîne ainsi une période pendant laquelle la pince n'est pas remplacée, ou pendant laquelle l'unité de fabrication doit être arrêtée. Il en résulte une baisse de la production.

Leur remplacement peut également se révéler coûteux et ce d'autant plus si la commande est réalisée au coup par coup et avec une demande de livraison très rapide.

La situation où une ou plusieurs pinces se cassent se révèle ainsi problématique du fait qu'elle entraîne une baisse de la production, voire un arrêt, et des coûts importants pour pouvoir remplacer rapidement cette pince.

L'invention a pour objectif de pallier à une telle situation.

Plus précisément, l'invention a pour objectif de proposer une solution visant à pallier, au moins temporairement, aux inconvénients relatifs à la casse d'une pince de manipulation de corps creux dans une unité de fabrication de récipients en matière plastique.

L'invention a également pour objectif de fournir une telle solution qui permette de relancer rapidement la production des récipients à une cadence identique à celle préalable à la casse.

L'invention a encore pour objectif de fournir une telle solution qui n'engendre pas un surcoût déraisonnable pour être mise en oeuvre.

Ces objectifs, ainsi que d'autres qui apparaîtront par la suite, sont atteints grâce à l'invention qui a pour objet une branche de pince de manipulation de corps creux dans une unité de fabrication de récipients en matière plastique, la pince de manipulation comprenant deux branches destinées à être tenues par un organe de maintien et étant destinée à saisir un corps creux, la branche comprenant :
- une base présentant des moyens de coopération destinés à coopérer avec l'organe de maintien pour établir un couplage de la branche à l'organe de maintien ;
- une mâchoire s'étendant depuis la base et présentant un bord avant destiné à être en contact avec les corps creux ;
caractérisé en ce que la branche est formée par :
- une âme métallique constituant au moins partiellement la base et les moyens de coopération, l'âme métallique s'étendant dans la mâchoire en retrait du bord avant ;
- un complément plastique en recouvrement au moins partiel de l'âme métallique, le complément plastique constituant au moins le bord avant et étant solidarisée à l'âme métallique.

Grâce à la branche de pince selon l'invention, une pince peut être réparée, partiellement ou complétement, rapidement et sans présenter un coût aussi élevé qu'une commande en urgence d'une pince obtenue par usinage mécanique de précision.

Plus précisément, la branche de pince selon l'invention présente la même forme que celle qui doit être réparée.

Selon le principe de l'invention, la branche de pince présente une conception composite avec l'âme métallique et le complément plastique en recouvrement. Cette conception composite permet d'associer :
- une première partie formée par un renfort métallique standardisé, aisément disponible, et peu coûteux, pouvant donc être fabriqué en nombre en vue de constituer un stock ;
- une deuxième partie formée à partir d'un matériau plastique, pouvant être aisément et rapidement produite (notamment directement sur le lieu d'implantation de l'unité de fabrication), tout en présentant un coût de fabrication peu élevé.

Une telle conception composite permet à la pince de remplacement de supporter les conditions de fabrication des récipients, et notamment les températures élevées des fours des unités de fabrication.

Bien qu'elle ne présente pas une longévité importante, cette pince composite offre suffisamment de temps à des opérateurs de l'unité de fabrication pour approvisionner à un coût raisonnable des pinces de manipulation métalliques obtenues par usinage mécanique de précision.

Grâce à la pince de remplacement selon l'invention qui peut être produite sur place rapidement, l'absence de stock de pinces de manipulation de remplacement ne provoque pas d'arrêt de production particulièrement long.

Enfin, le bord avant réalisé en matériau plastique présente la capacité de ne pas marquer les corps creux dans l'unité de fabrication, dans la mesure où il est identique à celui d'une pince fabriquée par mécanique de précision, et où le plastique utilisé présente une dureté moins importante que celle de l'acier.

Le complément plastique permet en effet à la branche de pince de manipulation selon l'invention de ne pas abîmer les corps creux.

Ce matériau plastique peut présenter une relative fragilité mais voit cette fragilité compensée par la présence de l'âme métallique.

La branche de pince selon l'invention présente également pour avantage de pouvoir être aisément, et à un coût peu élevé, d'être adapté au remplacement de pinces de manipulation de différents calibres.

En effet, l'âme métallique peut présenter une conception standardisée lui autorisant d'être employée pour la réalisation de pinces de manipulation présentant des pas (écartement) différents. Il s'agit alors du complément plastique qui est conçu de manière différente pour s'adapter à la forme définitive voulue de la pince de manipulation à remplacer.

Selon l'invention, l'âme métallique comprend :
- un bloc métallique constituant au moins partiellement la base et les moyens de coopération ;
- une tige métallique couplée au bloc métallique et s'étendant depuis le bloc métallique dans la mâchoire.

Le bloc métallique, formant essentiellement la base de la branche, est un élément résistant et peu soumis aux contraintes contrairement à la mâchoire de la branche de pince. Il peut alors être réalisé par usinage mécanique de précision et être réutilisable.

La tige métallique forme quant à elle un élément peu onéreux à produire et peut être aisément remplacée lors de la fabrication d'une nouvelle branche de pince avec le bloc métallique réutilisé.

Le bloc métallique présente deux logements aptes chacun à recevoir la tige métallique pour la coupler au bloc métallique, les logements étant ménagés de part et d'autre d'un axe central du bloc métallique.

Grâce à cette conception, le bloc métallique peut être indifféremment utilisé pour réaliser une branche droite ou gauche de pince.

Selon une autre conception qui n'est pas l'objet de l'invention, l'âme métallique est une tôle plane.

L'utilisation d'une tôle plane se révèle particulièrement adaptée de par la capacité de ce matériau à présenter la résistance structurelle nécessaire à la réalisation de l'âme métallique.

Une telle tôle plane présente également un coût de fabrication faible.

La tôle plane peut être usinée, découpée par laser ou encore emboutie pour permettre l'obtention de l'âme métallique.

Il est important de noter que cette âme métallique n'est pas nécessairement obtenue par un usinage de précision. Ceci est d'autant plus avantageux que c'est le complément plastique en recouvrement au moins partiel de l'âme métallique qui vient en contact avec les corps creux.

Selon une conception préférée, l'âme métallique présente au moins un trou traversant ménagé dans son épaisseur, le complément plastique présentant deux faces situées de part et d'autre du trou traversant et étant solidarisé au travers du trou traversant.

De cette manière, le complément plastique est solidarisé de manière particulièrement résistante à l'âme métallique.

Il en résulte que le complément plastique est rigidifié avec l'âme métallique et cette dernière peut reprendre de manière optimale les efforts s'exerçant sur le complément plastique.

Préférentiellement, l'âme métallique est noyée dans le complément plastique. Dans ce cas, la solidarisation du complément plastique sur l'âme métallique est optimisée et la capacité de l'âme métallique à reprendre les efforts est renforcée.

Cette conception permet également de minimiser la quantité de matière utilisée pour former l'âme métallique. Il s'agit alors du complément plastique qui vient former l'essentiel de la branche de pince de manipulation selon l'invention et qui, au final, constitue sa forme.

Préférentiellement, le complément plastique est monobloc.

De cette manière, la résistance de ce complément plastique est optimisée.

Selon un autre mode de réalisation envisageable, le complément plastique est réalisé en au moins deux pièces assemblées les unes aux autres.

Selon un mode de réalisation préférentiel, le complément plastique est obtenu par fabrication additive en plastique. Grâce à ce mode de réalisation, le complément plastique peut être réalisé rapidement, sur demande, et pour un coût peu important.

Il est important de noter que le complément plastique peut, dans ce cas, être directement réalisé sur le lieu d'implantation de l'unité de fabrication de récipients en matière plastique. Cette capacité se révèle particulièrement importante pour des opérateurs de l'unité de fabrication ayant besoin de pouvoir répondre rapidement à une casse d'une pince de manipulation de corps creux.

Cette fabrication additive en plastique pour réaliser le complément plastique permet également d'adapter extrêmement rapidement la forme du complément plastique que l'on cherche à obtenir.

L'invention a également pour objet un procédé de fabrication d'une branche de pince de manipulation de corps creux, tel que défini précédemment.

Ce procédé de fabrication est caractérisé en ce qu'il comprend :
- une étape préalable d'obtention d'une âme métallique ;
- une étape de solidarisation d'un complément plastique sur l'âme métallique, le complément plastique étant réalisé en recouvrement au moins partiel de l'âme métallique.

Lors de l'étape préalable d'obtention de l'âme métallique, cette âme métallique est fabriquée ou tout simplement achetée.

Ce procédé permet de fabriquer rapidement une pince de manipulation de corps creux pour une unité de fabrication de récipients en matière plastique qui présente la capacité de supporter temporairement les contraintes d'une unité de fabrication tout en n'abîmant pas les corps creux qui seront insérés, convoyés et extraits de la pince de manipulation temporaire.

Ce procédé de fabrication est ainsi particulièrement adapté pour pouvoir effectuer un remplacement temporaire d'une pince de manipulation obtenue par usinage de précision qui serait abîmée et dont le remplacement rapide serait soit extrêmement coûteux ou dont le non-remplacement entraînerait une baisse de la production ou un arrêt de la production indésirable.

Le procédé de fabrication comprend une étape de fabrication additive du complément plastique.

Le procédé de fabrication offre ainsi la capacité d'adapter rapidement la forme du complément plastique et d'obtenir rapidement et à un faible coût ce complément plastique.

Par exemple, en moins d'une heure, il peut être fabriqué la pince de manipulation des corps creux selon l'invention.

L'étape de fabrication additive comprend :
- une première sous-étape d'impression d'une forme intermédiaire du complément plastique, la forme intermédiaire présentant une empreinte de l'âme métallique ouverte sur une face de la forme intermédiaire;
- une deuxième sous-étape d'impression d'une forme finale du complément plastique à partir de la forme intermédiaire ;
le procédé de fabrication comprenant une étape d'insertion de l'âme métallique dans l'empreinte présentée par la forme intermédiaire, l'étape d'insertion étant intercalée entre la première sous-étape d'impression et la deuxième sous-étape d'impression.

L'âme métallique est alors au moins partiellement noyée à l'intérieur du complément plastique directement lors de l'étape de fabrication additive.

Ceci permet de maximiser la résistance structurelle de la branche de pince de manipulation selon l'invention ainsi obtenue.

Plus précisément, cette étape de fabrication additive favorise l'accroche de la matière plastique du complément plastique sur l'âme métallique.

De manière préférentielle, l'âme métallique est chauffée préalablement à l'étape d'insertion.

Le matériau plastique présente alors une meilleure accroche sur l'âme métallique.

Selon une solution avantageuse, l'âme métallique est recouverte au moins partiellement d'une laque d'impression préalablement à l'étape d'insertion.

Dans ce cas, il a été constaté que l'accroche de la matière plastique sur l'âme métallique est encore améliorée, et que la branche de pince de manipulation obtenue présente une qualité de finition plus importante par rapport à celle obtenue par le procédé sans laque d'impression.

D'autres caractéristiques et avantages de l'invention apparaîtront plus clairement à la lecture de la description suivante de deux modes de réalisation préférentiels de l'invention, donnés à titre d'exemples illustratifs et non limitatifs, et des dessins annexés parmi lesquels :
[Fig. 1] est une vue en perspective du dessus d'une pince de manipulation de corps creux présentant deux branches ;
[Fig. 2] est une vue en perspective du dessus d'une branche comprenant une âme métallique et un complément plastique en recouvrement de l'âme métallique, le complément plastique étant représenté en coupe partielle;
[Fig. 3] est une vue en perspective du dessus d'une âme métallique;
[Fig. 4] est une vue en perspective du dessous d'une pince de manipulation de corps creux, comprenant deux branches selon l'invention, l'une des branches étant dépourvue de son complément plastique et l'autre des branches présentant son renfort métallique visible par transparence au travers de son complément plastique ;
[Fig. 5] est une vue en perspective de dessus d'un bloc métallique du renfort métallique de la branche selon le deuxième mode de réalisation ;
[Fig. 6] est une vue en perspective du dessus du complément plastique d'une branche.

L'expression « corps creux » est ci-après employée pour désigner tant une préforme, qu'un récipient final ayant subi au moins une opération de soufflage ou une opération d'étirage-soufflage.

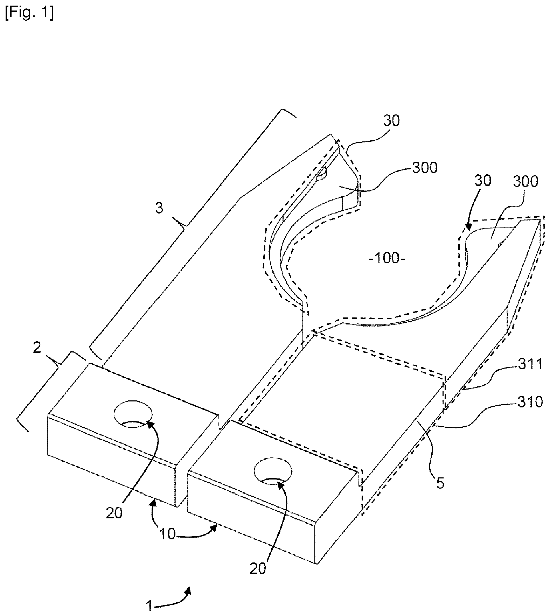

En référence à la figure 1, une pince 1 de manipulation de corps creux est représentée. Une telle pince 1 de manipulation est utilisée dans une unité de fabrication de récipients en matière plastique comprenant les machines suivantes : souffleuse, remplisseuse, étiqueteuse, ...

Cette pince 1 de manipulation comprend deux branches 10.

Ces deux branches 10 sont conçues pour être maintenues par un organe de maintien (non représenté) de l'unité de fabrication. Chacune des branches 10 comprend à cet effet des moyens de coopération 20 destinés à coopérer avec l'organe de maintien pour établir un couplage de la branche 10 à l'organe de maintien.

Les branches 10 sont destinées à saisir les corps creux par leur col. Ces deux branches 10 délimitent conjointement un espace 100 de réception des corps creux lorsqu'ils sont saisis.

Les corps creux sont essentiellement emboîtés dans cet espace 100 de réception.

Plus précisément, chacune des branches 10 est maintenue en position par l'organe de maintien et les branches 10 ne présentent qu'une relative mobilité l'une par rapport à l'autre pour permettre l'insertion, le convoyage et l'extraction des corps creux.

En référence aux figures 1, 2 et 4, chaque branche 10 comprend :
- une base 2 ;
- une mâchoire 3 qui s'étend depuis la base 2.

La base 2 présente les moyens de coopération 20 destinés à coopérer avec l'organe de maintien pour établir un couplage de la branche 10 à l'organe de maintien. Ces moyens de coopération prennent la forme d'un trou traversant la base 2.

Cette base 2 présente une forme essentiellement parallélépipédique rectangle.

La mâchoire 3 présente quant à elle un bord avant 30 qui est destiné à entrer en contact avec les corps creux.

De manière plus particulière et en référence aux figures 1, 2 et 4, une mâchoire 3 comprend :
- un corps 310 s'étendant directement à partir de la base 2 ;
- une tête 311 située à l'extrémité du corps 310 en étant opposée à la base 2 par rapport au corps 310, et qui présente le bord avant 30.

Tel qu'illustré par les figures 1, 4 et 6, le bord avant 30 comprend un décrochement 300. Les cols des corps creux saisis par une pince 1 de manipulation viennent reposer sur le décrochement 300 présenté par chacune des branches 10 de la pince 1 de manipulation.

La forme de la branche 10 de la pince 1 de manipulation selon l'invention est ainsi identique à celle des branches des pinces de manipulation métalliques d'origine.

Ces pinces de manipulation métallique d'origine sont réalisées par usinage mécanique de précision. Quand une branche de la pince d'origine casse, la branche 10 selon l'invention est destinée à venir la remplacer temporairement.

Selon le principe de l'invention et en référence aux figures 1 à 6, la branche 10 est formée par une âme métallique 4 et un complément plastique 5.

L'âme métallique 4 constitue au moins partiellement la base 2 et les moyens de coopération 20.

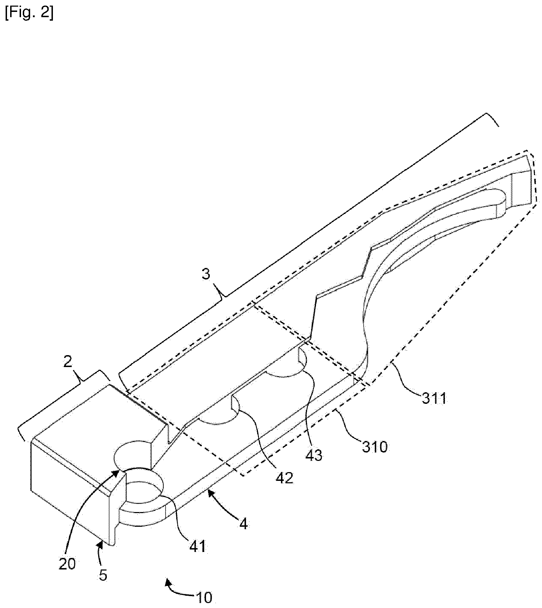

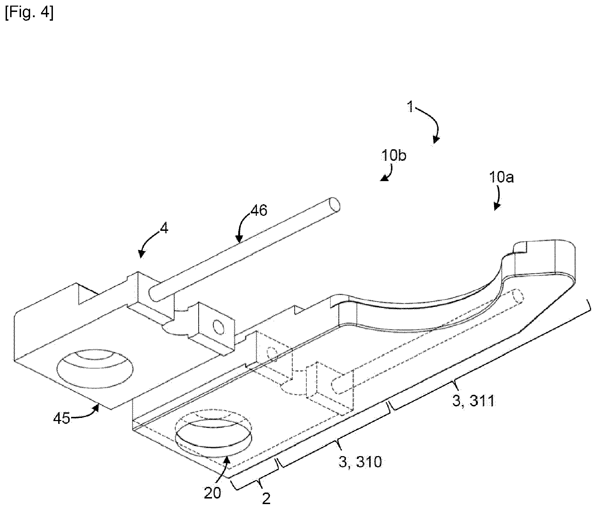

En référence aux figures 2 et 4, cette âme métallique 4 s'étend dans la mâchoire 3 en retrait du bord avant 30. L'âme métallique 4, en s'étendant dans la mâchoire 3, a pour fonction de rigidifier cette mâchoire.

Ainsi, l'extrémité de l'âme métallique 4, dans la mâchoire 3 et plus spécifiquement dans la tête 311 de la mâchoire 3, présente une partie située en retrait et le long du bord avant 30.

Selon le principe de l'invention et en référence aux figures 1 à 6, le complément plastique 5 :
- vient en recouvrement au moins partiel de l'âme métallique 4 ;
- constitue au moins le bord avant 30 de la mâchoire 3.

Par l'expression « le complément plastique constitue au moins le bord avant », il est entendu que seul le complément plastique forme le bord avant 30. L'âme métallique 4 ne forme pas ou ne constitue pas au moins une partie de ce bord avant 30. Ainsi, seulement le complément plastique 5 de la branche 10 de la pince 1 de manipulation selon l'invention peut entrer en contact avec un corps creux.

Ce complément plastique 5 est solidarisé à l'âme métallique 4.

Selon un exemple non revendiqué illustré par les figures 1 à 3, le complément plastique 5 est en recouvrement total de l'âme métallique 4 à l'exception d'un premier trou 41 traversant situé dans la base 2.

En référence aux figures 1 et 2, l'âme métallique 4 est noyée partiellement dans le complément plastique 5.

Ce complément plastique 5 est notamment monobloc et est en particulier obtenu par fabrication additive en plastique.

En d'autres termes, le complément plastique 5 est réalisé par impression tridimensionnelle (impression 3D) autour de l'âme métallique 4.

Le complément plastique 5 présente une empreinte de l'âme métallique 4 lui permettant d'accueillir cette dernière.

L'empreinte correspond notamment à la forme externe de l'âme métallique 4 augmentée d'un jeu de 0.1 mm.

En référence à la figure 2, l'âme métallique 4 est plane et est plus particulièrement réalisée dans une tôle plane.

L'âme métallique est encore plus spécifiquement obtenue par le biais d'une découpe laser d'une tôle plane.

Cette âme métallique 4 comprend :
- le premier trou 41 traversant qui est destiné à participer à la formation des moyens de coopération 20 ;
- un deuxième trou 42 traversant ;
- un troisième trou 43 traversant.

Le deuxième trou 42 et le troisième trou 43 participent à la solidarisation du complément plastique 5 sur l'âme métallique 4.

En effet, le complément plastique 5 présente deux faces situées de part et d'autre du deuxième trou 42 et du troisième trou 43, et il est solidarisé au travers de ces trous 42, 43.

Plus spécifiquement, l'âme métallique 4 s'étend longitudinalement en présentant successivement :
- une première section 401 comprenant le premier trou 41 ;
- une deuxième section 402 comprenant le deuxième trou 42 et le troisième trou 43 ;
- une troisième section 403.

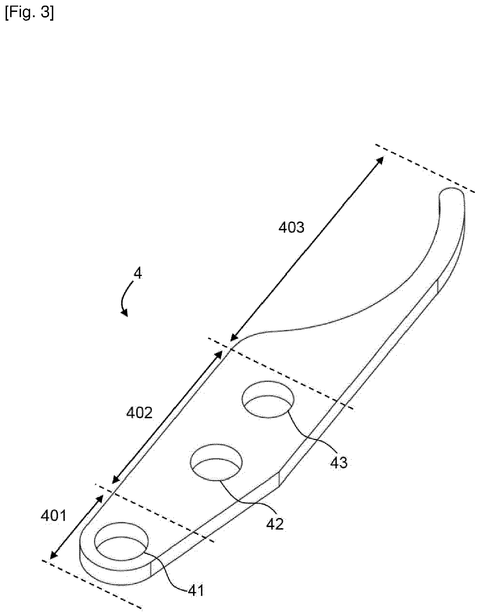

Selon les figures 2 et 3, en coopération avec le complément plastique 5 :
- la première section 401 de l'âme métallique 4 participe à former la base 2 de la branche 10 ;
- la deuxième section 402 de l'âme métallique 4 participe à former le corps 310 de la mâchoire 3 ;
- la troisième section 403 de l'âme métallique 4 participe à former la tête 311 de la mâchoire 3.

La troisième section 403 de l'âme métallique 4 présente notamment une forme courbe épousant la forme du bord avant 30 formée par le complément plastique 5

Selon l'invention illustré par les figures 4 à 6, le complément plastique 5 est en recouvrement partiel de l'âme métallique 4.

De plus, selon ce deuxième mode de réalisation, l'âme métallique 4 comprend :
- un bloc 45 métallique ;
- une tige 46 métallique couplée au bloc 45 métallique.

Le bloc 45 métallique constitue au moins partiellement la base et les moyens de coopération.

La tige 46 métallique s'étend depuis le bloc 45 métallique dans la mâchoire 3.

Le bloc 45 métallique présente un premier trou 41 traversant qui est destiné à participer à la formation des moyens de coopération 20.

Pour permettre le couplage de la tige 46 métallique, le bloc 45 métallique présente deux logements 450 aptes chacun à recevoir la tige 46 métallique.

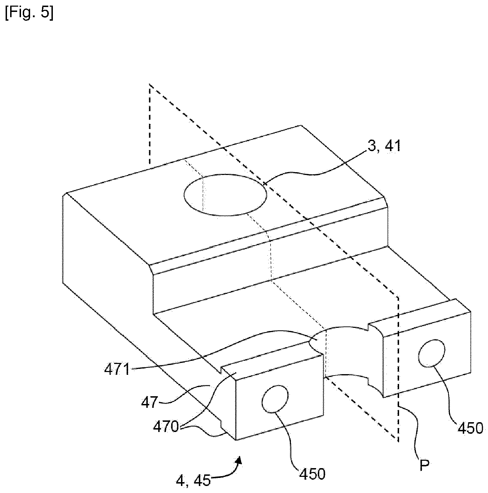

En référence à la figure 5, ces logements 450 sont ménagés de part et d'autre d'un plan central P de symétrie du bloc 45 métallique.

Tel que cela est visible sur la figure 4, le bloc 45 métallique est conçu pour être utilisé pour la fabrication d'une branche droite 10a ou d'une branche gauche 10b d'une pince 1 de manipulation de corps creux.

Ce bloc 45 métallique peut être réutilisé si le complément plastique 5 venait à céder.

Ce bloc 45 métallique peut être réalisé par usinage mécanique de précision.

Pour fabriquer une branche droite 10a ou une branche gauche 10b, la tige 46 métallique doit être insérée dans le logement 450 adéquat.

Le complément plastique 5 vient ensuite en recouvrement total de la tige 46 métallique et en recouvrement partiel du bloc 45 métallique.

Le bloc 45 métallique présente un relief particulier sur sa surface destinée à être recouverte par le complément plastique 5. Ce relief particulier est destiné à améliorer la solidarisation du complément plastique 5 au bloc 45 métallique.

Plus particulièrement et tel qu'illustré par les figures 4 et 5, le bloc 45 métallique comprend une extrémité 47, depuis laquelle s'étend le complément plastique 5, présentant un profil en T, et une gorge 471 perpendiculaire au profil en T.

En d'autres termes, à son extrémité 47 le bloc 45 présente deux languettes 470 dont une est située sur une face supérieure de l'extrémité 47 et dont l'autre est située sur une face inférieure de l'extrémité 47. La gorge 471 s'étend perpendiculairement aux languettes 470 en passant en leur centre.

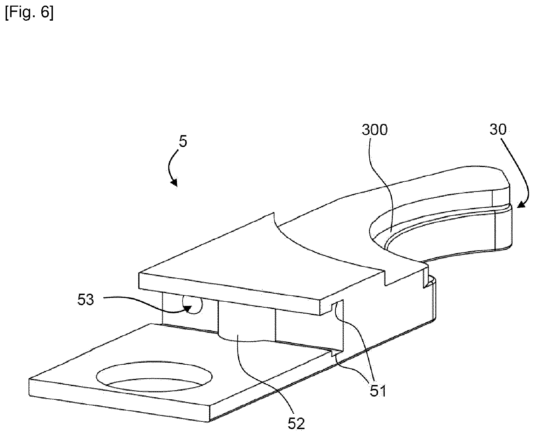

En référence à la figure 6, le complément plastique 5 présente :
- deux rainures 51 complémentaires en forme des languettes 470 ;
- un bourrelet 52 complémentaire en forme de la gorge 471.

Bien entendu, le complément plastique 5 présente également un trou 53 complémentaire en forme de la tige 46 métallique.

La branche 10 de pince 1 de manipulation est obtenue grâce au procédé de fabrication selon l'invention.

Ce procédé de fabrication comprend :
- une étape préalable d'obtention d'une âme métallique 4 ;
- une étape de solidarisation d'un complément plastique 5 sur l'âme métallique 4, le complément plastique 5 étant réalisé en recouvrement au moins partiel de l'âme métallique 4.

Pour l'étape préalable d'obtention d'une âme métallique 4, il est procédé soit à la fabrication de l'âme métallique 4, soit à son acquisition.

Par exemple, dans le cas où l'âme métallique 4 comprend un bloc 45 métallique réalisé par usinage mécanique de précision, ce bloc 45 peut être acheté.

Le procédé de fabrication comprend une étape de fabrication additive du complément plastique 5.

L'étape de solidarisation peut alors se produire en même temps que l'étape de fabrication additive, par exemple si le complément plastique 5 est monobloc et noie au moins partiellement l'âme métallique 4.

L'étape de fabrication additive comprend successivement :
- une première sous-étape d'impression d'une forme intermédiaire du complément plastique 5 ;
- une deuxième sous-étape d'impression d'une forme finale du complément plastique à partir de la forme intermédiaire ;

L'étape de fabrication additive est avantageusement paramétrée à l'aide d'un rendu tridimensionnel de la pince de manipulation d'origine qui est créée par usinage mécanique de précision. Ce rendu tridimensionnel est retravaillé en soustrayant le volume de l'âme métallique, qui doit être noyé au moins partiellement, additionné d'un jeu de 0,1 mm.

La forme intermédiaire du complément plastique 5 présente une empreinte de l'âme métallique 4 ouverte sur une face de la forme intermédiaire.

Le procédé de fabrication comprend alors une étape d'insertion de l'âme métallique 4 dans l'empreinte présentée par la forme intermédiaire du complément plastique 5.

Cette étape d'insertion est intercalée entre la première sous-étape d'impression et la deuxième sous-étape d'impression de manière à permettre de noyer au moins partiellement l'âme métallique 4 dans le complément plastique 5, et ainsi à assembler l'âme métallique 4 et le complément plastique 5.

Pour améliorer l'accroche du complément plastique 5 sur l'âme métallique 4, l'âme métallique 4 est chauffée préalablement à l'étape d'insertion.

Par exemple, si le matériel utilisé pour imprimer le complément plastique 5 dispose d'un plateau d'impression chauffant, alors l'âme métallique 4 est déposée sur le plateau préalablement à la première sous-étape d'impression.

De plus, l'âme métallique 4 est recouverte au moins partiellement d'une laque d'impression préalablement à l'étape d'insertion.

Une laque d'impression correspond à un produit pulvérisé sur une surface destinée à être en contact avec le matériau imprimé en 3D. Cette laque d'impression permet d'améliorer l'adhésion (ou en d'autres termes « l'accrochage ») du matériau imprimé sur la surface pulvérisée avec la laque.

Une unité de fabrication de récipients en matière plastique peut incorporer une imprimante tridimensionnelle mettant en oeuvre le procédé de fabrication selon l'invention.

Avantageusement, l'imprimante comprend une interface de sélection d'une pince à produire et des moyens de connexion à un serveur distant hébergeant des plans de pinces de manipulation.

Ainsi, la fabrication d'une pince de manipulation est initiée à l'aide de l'interface de sélection qui entraîne la connexion au serveur distant et le téléchargement du plan correspondant à la pince de manipulation souhaitée.

Ce serveur distant peut être situé chez le concepteur de l'unité de fabrication de récipients, et administré par ce concepteur. Ainsi, le concepteur peut apporter rapidement des modifications aux différents plans de pinces de manipulation, par exemple pour corriger des défauts de fabrication identifiés, tout cela étant transparent pour l'utilisateur final qui a seulement besoin d'initier la fabrication d'une pince de manipulation.

## Revendications

1. Branche (10) de pince (1) de manipulation de corps creux dans une unité de fabrication de récipients en matière plastique, la pince de manipulation comprenant deux branches (10) destinées à être tenues par un organe de maintien et étant destinée à saisir un corps creux, la branche (10) comprenant :
- une base (2) présentant des moyens de coopération (20) destinés à coopérer avec l'organe de maintien pour établir un couplage de la branche (10) à l'organe de maintien ;
- une mâchoire (3) s'étendant depuis la base (2) et présentant un bord avant (30) destiné à être en contact avec les corps creux;
la branche (10) est formée par :
- une âme métallique (4) constituant au moins partiellement les moyens de coopération (20), l'âme métallique (4) s'étendant dans la mâchoire (3) en retrait du bord avant (30) ;
- un complément plastique (5) en recouvrement au moins partiel de l'âme métallique (4), le complément plastique (5) constituant au moins le bord avant (30) et étant solidarisé à l'âme métallique (4) ;
l'âme métallique (4) comprend :
- un bloc (45) métallique constituant au moins partiellement les moyens de coopération (20) ;
- une tige (46) métallique couplée au bloc (45) métallique et s'étendant depuis le bloc (45) métallique dans la mâchoire (3) ;
ladite branche (10) de pince (1) étant **caractérisée en ce que** le bloc (45) métallique présente deux logements (450) aptes chacun à recevoir la tige (46) métallique pour la coupler au bloc (45) métallique, les logements (450) étant symétrique l'un par rapport à l'autre par rapport à un plan central (P) de symétrie du bloc (45) métallique.

2. Branche (10) de pince (1) de manipulation selon la revendication précédente, **caractérisée en ce que** l'âme métallique (4) présente au moins un trou (42, 43) traversant ménagé dans son épaisseur, le complément plastique (5) présentant deux faces situées de part et d'autre du trou (42, 43) traversant et étant solidarisé au travers du trou (42, 43) traversant.

3. Branche (10) de pince (1) de manipulation selon l'une quelconque des revendications précédentes, **caractérisée en ce que** l'âme métallique (4) est noyée dans le complément plastique (5).

4. Branche (10) de pince (1) de manipulation selon l'une quelconque des revendications précédentes, **caractérisée en ce que** le complément plastique (5) est monobloc.

5. Branche (10) de pince (1) de manipulation selon l'une quelconque des revendications précédentes, **caractérisée en ce que** le complément plastique (5) est obtenu par fabrication additive en plastique.

6. Procédé de fabrication d'une branche (10) de pince (1) de manipulation de corps creux selon l'une quelconque des revendications précédentes,
**caractérisé en ce qu'**il comprend :
- une étape préalable d'obtention d'une âme métallique (4) ;
- une étape de solidarisation d'un complément plastique (5) sur l'âme métallique (4), le complément plastique (5) étant réalisé en recouvrement au moins partiel de l'âme métallique (4), ledit complément plastique (5) étant obtenu par une étape de fabrication additive ;
et **en ce que** l'étape de fabrication additive comprend :
- une première sous-étape d'impression d'une forme intermédiaire du complément plastique (5), la forme intermédiaire présentant une empreinte de l'âme métallique (4) ouverte sur une face de la forme intermédiaire;
- une deuxième sous-étape d'impression d'une forme finale du complément plastique (5) à partir de la forme intermédiaire ;
le procédé de fabrication comprenant une étape d'insertion de l'âme métallique (4) dans l'empreinte présentée par la forme intermédiaire, l'étape d'insertion étant intercalée entre la première sous-étape d'impression et la deuxième sous-étape d'impression.

7. Procédé de fabrication selon la revendication précédente, **caractérisé en ce que** l'âme métallique (4) est chauffée préalablement à l'étape d'insertion.

8. Procédé de fabrication selon l'une quelconque des revendications 6 et 7, **caractérisé en ce que** l'âme métallique (4) est recouverte au moins partiellement d'une laque d'impression préalablement à l'étape d'insertion.

## Patentansprüche

1. Schenkel (10) einer Zange (1) zur Handhabung von Hohlkörpern in einer Fertigungseinheit von Kunststoffbehältern, wobei die Handhabungszange zwei Schenkel (10) enthält, die dazu bestimmt sind, von einem Halteelement gehalten zu werden, und dazu bestimmt sind, einen Hohlköper zu ergreifen, wobei der Schenkel (10) enthält:
- eine Basis (2), die Zusammenwirkungseinrichtungen (20) aufweist, die dazu bestimmt sind, mit dem Halteelement zusammenzuwirken, um eine Kopplung des Schenkels (10) mit dem Halteelement herzustellen;
- eine Backe (3), die sich von der Basis (2) erstreckt und einen vorderen Rand (30) aufweist, der dazu bestimmt ist, mit den Hohlkörpern in Kontakt zu sein;
der Schenkel (10) wird gebildet von:
- einem Metallkern (4), der mindestens teilweise die Zusammenwirkungseinrichtungen (20) bildet, wobei der Metallkern (4) sich in der Backe (3) vom vorderen Rand (30) zurückversetzt erstreckt;
- eine Kunststoffergänzung (5) in mindestens teilweiser Überlappung des Metallkerns (4), wobei die Kunststoffergänzung (5) mindestens den vorderen Rand (30) bildet und fest mit dem Metallkern (4) verbunden ist;
der Metallkern (4) enthält:
- einen Metallblock (45), der mindestens teilweise die Zusammenwirkungseinrichtungen (20) bildet; - eine Metallstange (46), die mit dem Metallblock (45) gekoppelt ist und sich vom Metallblock (45) in die Backe (3) erstreckt;
wobei der Schenkel (10) einer Zange (1) **dadurch gekennzeichnet ist, dass** der Metallblock (45) zwei Aufnahmen (450) aufweist, die je fähig sind, die Metallstange (46) aufzunehmen, um sie mit dem Metallblock (45) zu koppeln, wobei die Aufnahmen (450) bezüglich einer mittleren Symmetrieebene (P) des Metallblocks (45) zueinander symmetrisch sind.

2. Schenkel (10) einer Handhabungszange (1) nach dem vorhergehenden Anspruch, **dadurch gekennzeichnet, dass** der Metallkern (4) mindestens ein in seiner Dicke vorgesehenes Durchgangsloch (42, 43) aufweist, wobei die Kunststoffergänzung (5) zwei zu beiden Seiten des Durchgangslochs (42, 43) befindliche Flächen aufweist und durch das Durchgangsloch (42, 43) hindurch fest verbunden ist.

3. Schenkel (10) einer Handhabungszange (1) nach einem der vorhergehenden Ansprüche, **dadurch gekennzeichnet, dass** der Metallkern (4) in die Kunststoffergänzung (5) eingebettet ist.

4. Schenkel (10) einer Handhabungszange (1) nach einem der vorhergehenden Ansprüche, **dadurch gekennzeichnet, dass** die Kunststoffergänzung (5) einstückig ist.

5. Schenkel (10) einer Handhabungszange (1) nach einem der vorhergehenden Ansprüche, **dadurch gekennzeichnet, dass** die Kunststoffergänzung (5) durch additive Fertigung aus Kunststoff erhalten wird.

6. Fertigungsverfahren eines Schenkels (10) einer Handhabungszange (1) von Hohlkörpern nach einem der vorhergehenden Ansprüche, **dadurch gekennzeichnet, dass** es enthält:
- einen vorhergehenden Schritt des Erhalts eines Metallkerns (4);
- einen Schritt der Befestigung einer Kunststoffergänzung (5) am Metallkern (4), wobei die Kunststoffergänzung (5) in mindestens teilweiser Überlappung des Metallkerns (4) hergestellt wird, wobei die Kunststoffergänzung (5) durch einen additiven Fertigungsschritt erhalten wird;
und dass der additive Fertigungsschritt enthält:
- einen ersten Teilschritt des Druckens einer Zwischenform der Kunststoffergänzung (5), wobei die Zwischenform einen Abdruck des Metallkerns (4) aufweist, der auf eine Seite der Zwischenform offen ist;
- einen zweiten Teilschritt des Druckens einer endgültigen Form der Kunststoffergänzung (5) ausgehend von der Zwischenform;
wobei das Fertigungsverfahren einen Schritt des Einführens des Metallkerns (4) in den von der Zwischenform präsentierten Abdruck enthält, wobei der Einführschritt zwischen des ersten Druck-Teilschritt und den zweiten Druck-Teilschritt eingefügt ist.

7. Fertigungsverfahren nach dem vorhergehenden Anspruch, **dadurch gekennzeichnet, dass** der Metallkern (4) vor dem Einführschritt erwärmt wird.

8. Fertigungsverfahren nach einem der Ansprüche 6 und 7, **dadurch gekennzeichnet, dass** der Metallkern (4) vor dem Einführschritt mindestens teilweise mit einem Drucklack bedeckt wird.

## Claims

1. Branch (10) of a gripper (1) for handling hollow bodies in a unit for manufacturing containers made of plastic material, the handling gripper comprising two branches (10) intended to be held by a holding member and being intended to grasp a hollow body, the branch (10) comprising:
- a base (2) having cooperation means (20) intended to cooperate with the holding member to establish a coupling of the branch (10) to the holding member;
- a jaw (3) extending from the base (2) and having a front edge (30) intended to be in contact with the hollow bodies;
the branch (10) is formed by:
- a metal core (4) at least partially constituting the cooperation means (20), the metal core (4) extending in the jaw (3) set back from the front edge (30);
- a plastic complement (5) at least partially covering the metal core (4), the plastic complement (5) constituting at least the front edge (30) and being secured to the metal core (4);
the metal core (4) comprises:
- a metal block (45) at least partially constituting the cooperation means (20);
- a metal rod (46) coupled to the metal block (45) and extending from the metal block (45) into the jaw (3);
said gripper (1) branch (10) being **characterized in that** the metal block (45) has two recesses (450) each capable of receiving the metal rod (46) to couple it to the metal block (45), the recesses (450) being symmetrical with respect to one another relative to a central plane (P) of symmetry of the metal block (45).

2. Handling gripper (1) branch (10) according to the preceding claim, **characterized in that** the metal core (4) has at least one through-hole (42, 43) formed in its thickness, the plastic complement (5) having two faces situated on either side of the through-hole (42, 43) and being secured through the through-hole (42, 43).

3. Handling gripper (1) branch (10) according to either one of the preceding claims, **characterized in that** the metal core (4) is embedded in the plastic complement (5).

4. Handling gripper (1) branch (10) according to any one of the preceding claims, **characterized in that** the plastic complement (5) is of a single piece.

5. Handling gripper (1) branch (10) according to any one of the preceding claims, **characterized in that** the plastic complement (5) is obtained by additive manufacturing in plastic.

6. Method for manufacturing a branch (10) of a gripper (1) for handling hollow bodies according to any one of the preceding claims, **characterized in that** it comprises:
- a preliminary step of obtaining a metal core (4);
- a step of securing a plastic complement (5) to the metal core (4), the plastic complement (5) being produced by at least partial covering of the metal core (4), said plastic complement (5) being obtained by an additive manufacturing step;
and **in that** the additive manufacturing step comprises:
- a first substep of printing an intermediate form of the plastic complement (5), the intermediate form having an imprint of the metal core (4) open on a face of the intermediate form;
- a second substep of printing a final form of the plastic complement (5) from the intermediate form;
the manufacturing method comprising a step of inserting the metal core (4) into the imprint presented by the intermediate form, the insertion step being interposed between the first printing substep and the second printing substep.

7. Manufacturing method according to the preceding claim, **characterized in that** the metal core (4) is heated prior to the insertion step.

8. Manufacturing method according to either one of Claims 6 and 7, **characterized in that** the metal core (4) is at least partially covered by a printing lacquer prior to the insertion step.
